# EUROPÄISCHE PATENTSCHRIFT

(11) **EP 1 833 697 B1**
(45) Veröffentlichungstag und Bekanntmachung des Hinweises auf die Patenterteilung: **26.05.2010**
(21) Anmeldenummer: 05819360.8
(22) Anmeldetag: 13.12.2005
(51) Int. Cl.: B60K 28/06, B62D 1/16, B62D 6/00

(54) **FAHRZUSTANDSÜBERWACHUNGSEINRICHTUNG FÜR EIN KRAFTFAHRZEUG**
VEHICLE DYNAMICS MONITORING DEVICE FOR A MOTOR VEHICLE
SYSTEME DE SURVEILLANCE DE CONDITION DE ROULAGE POUR UN VEHICULE AUTOMOBILE

(30) Priorität: 27.12.2004 DE 102004062820
(43) Veröffentlichungstag der Anmeldung: 19.09.2007
(73) Patentinhaber: ROBERT BOSCH GMBH, 70442 Stuttgart (DE)
(72) Erfinder: SCHICK, Jens, 71083 Herrenberg (DE); WUERZ-WESSEL, Alexander, 70599 Stuttgart (DE); SICKERT, Stefan, 71638 Ludwigsburg (DE)
(86) Internationale Anmeldenummer: PCT/EP2005/056759
(87) Internationale Veröffentlichungsnummer: WO 2006/069915

(56) Entgegenhaltungen:
- DE-A1- 10 303 870
- DE-A1- 10 306 100

## Beschreibung

Die Erfindung betrifft eine Fahrzustandsüberwachungseinrichtung für ein Kraftfahrzeug gemäß dem Oberbegriff des Anspruchs 1 bzw. 13.

### Stand der Technik

In der Zukunft ist bei Kraftfahrzeugen mit einem verstärkten Einsatz sogenannter Fahrerassistenzsysteme zu rechnen, das heißt Fahrzustandsüberwachungseinrichtungen, von denen aktuelle Fahrzustände oder Fahrsituationen des Fahrzeugs elektronisch überwacht werden, um den Fahrer bei größeren Abweichungen von einem Soll-Wert auf mögliche Gefahren hinzuweisen bzw. vor diesen zu warnen.

Eine der Funktionen derartiger Fahrerassistenzsysteme besteht gewöhnlich darin, festzustellen, ob das Fahrzeug einer Spur folgt, die zum Beispiel durch Auswertung von Bildern einer fahrzeugfesten Kamera oder durch Abtastung von in die Fahrbahn eingebetteten Leiterschleifen mittels geeigneter Sensoren vorgegeben werden kann. Dabei kann durch kontinuierliche Vermessung der Spur festgestellt werden, ob und zu welchem Zeitpunkt das Fahrzeug voraussichtlich die Spur verlassen wird, um den Fahrer rechtzeitig vor einem unbeabsichtigten Überfahren der Spurbegrenzungen darauf hinzuweisen bzw. vor einer dadurch drohenden Gefahr zu warnen. Während optische Anzeige- oder Warnsysteme den Nachteil haben, dass sie im Falle des sogenannten Sekundenschlafs vom Fahrer nicht wahrgenommen werden, führen akustische Warnsysteme bei vielen Beifahrern zu einem Gefühl der Unsicherheit, da diese im Gegensatz zum Fahrer nicht erkennen können, ob das Warnsignal durch eine gewollte oder eine ungewollte Lenkradbewegung ausgelöst worden ist. Um dies zu vermeiden, kann die Warnung auch mit Hilfe von Vibrationserzeugern oder "Shakern" im Fahrersitz erzeugt werden, deren Wirkung jedoch bei dick gepolsterten Fahrersitzen, zum Beispiel nach Auflegen eines Lammfells, erheblich abgeschwächt wird, so dass ihre Wirksamkeit im Falle eines Sekundenschlafs nicht immer gewährleistet ist. Außerdem können sie dem Fahrer nur indirekt einen Hinweis auf die Richtung der Spurabweichung geben, zum Beispiel durch ein entsprechendes einseitiges Rütteln am Fahrersitz.

Demgegenüber führt die Erzeugung einer Vibrations- oder Rüttelbewegung in der Lenksäule des Kraftfahrzeugs bei einer Abweichung von der Spur zu einem Warnhinweis, der vom Fahrer über das Lenkrad und die an diesem anliegenden Hände stets wahrgenommen wird, für Beifahrer jedoch nicht erkennbar ist.

Aus der DE 103 06 100 A1, die den Oberbegriff des Anspruchs 1 bildet, ist ein Kraftfahrzeug mit einem Lenksystem umfassend eine mechanische Lenksäule samt Lenkrad bekannt, bei der eine Einrichtung zur direkten oder indirekten Gabe eines über das Lenkrad haptisch wahrnehmbaren, richtungsselektiven impulsartig angelegten Drehmoments in Abhängigkeit einer von einem Erfassungssystem erfassten Richtungsabweichung vorgesehen ist. Sollte ein Stromausfall vorliegen, so sind Rückstellfedern vorgesehen, die auf Zahnräder derart eingreifen, dass sie einen Elektromotor zum Einwirken auf die Lenksäule von der Lenksäule mechanisch entkoppeln.

Aus der DE 201 01 014 U1 ist bereits eine Wamvorrichtung für bodengebundene Fahrzeuge bekannt, bei der zum Anzeigen eines anormalen Fahrzustands eine spürbare Vibrations- oder Rüttelbewegung im Lenkrad oder in der Lenksäule der Fahrzeuge erzeugt wird. Die Vibrations- oder Rüttelbewegung ist eine Schwingungsbewegung in und entgegen dem Uhrzeigersinn, die in Umfangsrichtung in das Lenkrad eingeleitet wird, wobei sie derart bemessen sein soll, dass sie zwar noch wahrgenommen werden kann, jedoch keine wahrnehmbare Fahrtrichtungsänderung der Fahrzeuge auslöst. Die Bewegung wird entweder von einem Elektromotor mit einer asymmetrisch um die Drehachse verteilten Drehmasse oder von einer Spule mit einem in Spulenlängsrichtung beweglichen permanentmagnetischen Kern erzeugt.

Idealerweise sollte dem Fahrer jedoch nicht nur das Eintreten eines anormalen Fahrzustands angezeigt werden, sondern im Fall eines Verlassens der Spur auch die Richtung, in welcher der Fahrer gegenlenken muss, um wieder auf die Spur zurück zu gelangen. Dazu kann eine gerichtete Vibrations- oder Rüttelbewegung in die Lenksäule eingeleitet werden, indem diese in der gewünschten Drehrichtung mit einem kleinen Drehmoment beaufschlagt wird. Gegebenenfalls könnte dieses Drehmoment sogar so groß gewählt werden, dass es einen geringen Lenkradausschlag zurück in Richtung der Spur zur Folge hat, sofern keine anderen Kräfte an der Lenkung angreifen. Wenn zur Erzeugung eines solchen Drehmoments ein mit der Lenksäule verbundener Elektromotor verwendet wird, kann jedoch nicht ausgeschlossen werden, dass es aufgrund von Fehlermomenten zu einer Gefährdung in der Querdynamik des Fahrzeugs und damit zur Entstehung eines sicherheitskritischen Systems kommen kann. Besonders bei Verwendung eines Elektromotors mit großer Übersetzung kann zudem das Massenträgheitsmoment dieses Antriebs zu einer Veränderung des Lenkgefühls des Fahrzeugs führen. Dies muss vermieden werden, da es sich bei dem Lenkgefühl um ein besonderes Charakteristikum jedes Fahrzeugs handelt.

### Vorteile der Erfindung

Die erfindungsgemäße Fahrzustandsüberwachungseinrichtung mit den im Anspruch 1 bzw. 13 angegebenen Merkmalen hat demgegenüber den Vorteil, dass sie es ohne eine Gefährdung der Querdynamik ermöglicht, eine Vibrations- oder Rüttelbewegung mit einem gerichteten Drehmoment auf die Lenksäule aufzubringen.

Der Erfindung liegt der Gedanke zugrunde, das Auftreten von sicherheitskritischen Fehlermomenten durch eine inhärente Begrenzung der auf die Lenksäule übertragbaren Energie zu verhindern, indem entweder vom mechanischen Energiespeicher nur eine begrenzte Energiemenge bereitgestellt wird, die zur Erzeugung der Vibrations- oder Rüttelbewegung und des gerichteten Drehmoments auf die Lenksäule übertragen werden kann, oder indem das maximal auf die Lenksäule übertragbare Drehmoment durch die reibschlüssige Kraftübertragung auf die Lenksäule begrenzt wird.

Eine bevorzugte Ausgestaltung der Erfindung sieht vor, dass mindestens ein Teil des Energiespeichers unter Speicherung von Verformungsenergie reversibel elastisch verformbar ist und dass der verformbare Teil oder ein mit diesem verbundener Teil des Energiespeichers drehbar ist und bei einer Aktivierung der zum Anzeigen von Spurabweichungen dienenden Anzeigevorrichtung unter Freigabe von gespeicherter Energie in Drehung versetzt wird, wobei diese Drehbewegung und die gleichzeitig erzeugte Vibrations- oder Rüttelbewegung reibschlüssig auf die Lenksäule übertragen werden.

Vorzugsweise sind der drehbare Teil und der elastisch verformbare Teil einstückig ausgebildet und werden von einem tordierbaren Körper aus einem gummielastisch verformbaren Material gebildet, der unter Verformung und Energiespeicherung verdreht und bei einer Aktivierung der Anzeigevorrichtung entlastet wird, wobei die gespeicherte Verformungs- oder Federenergie in eine Drehbewegung des Körpers umgewandelt wird. An Stelle eines gummielastischen Körpers kann alternativ jedoch auch eine Feder, zum Beispiel eine Spiralfeder, verwendet werden, die zur Speicherung von Energie gespannt wird und bei einer Aktivierung der Anzeigevorrichtung die gespeicherte Energie ähnlich wie die Feder eines Uhrwerks über ein oder mehrere Zahnräder auf ein im Reibkontakt mit dem Lenkrad stehendes drehbares Rad überträgt.

Um bei der Aktivierung der Anzeigevorrichtung die Übertragung eines zur vorangehenden Lenkerauslenkung bei der Spurabweichung entgegengesetzten Drehmoments auf die Lenksäule zu ermöglichen, sieht eine weitere bevorzugte Ausgestaltung der Erfindung vor, dass die Richtung eines durch Entlastung des Energiespeichers in die Lenksäule eingeleiteten Drehmoments veränderbar ist, indem die Drehbewegung des drehbaren Teils des Energiespeichers wahlweise direkt oder über ein zwischengeschaltetes Drehrichtungsumkehrelement auf die Lenksäule übertragen wird.

Um eine Veränderung des Lenkgefühls des Fahrzeugs während eines normalen Fahrzustands zu vermeiden, ist gemäß einer weiteren bevorzugten Ausgestaltung der Erfindung der drehbare Teil des Energiespeichers bzw. das Drehrichtungsumkehrelement ganz von der Lenksäule entkoppelt, solange die Anzeigevorrichtung nicht aktiviert ist.

Dazu ist zweckmäßig der gesamte Energiespeicher zusammen mit dem Drehrichtungsumkehrelement in einem zwischen drei Stellungen verschwenkbaren Käfig gelagert, wobei in einer ersten Stellung der drehbare Teil des Energiespeichers im Reibkontakt mit der Lenksäule steht, wobei in einer zweiten Stellung das Drehrichtungsumkehrelement im Reibkontakt mit der Lenksäule steht, und wobei in einer dritten, in normalen Fahrzuständen eingenommenen Stellung weder der drehbare Teil des Energiespeichers noch das Drehrichtungsumkehrelement im Reibkontakt mit der Lenksäule steht.

Zur Erzeugung der Vibrations- oder Rüttelbewegung weist der drehbare Teil des Energiespeichers vorzugsweise eine raue oder gerändelte Umfangsfläche auf, gegen die ein freies Ende eines elastisch nachgiebigen Vibrationserzeugungselements angepresst wird, so dass das Ende abwechselnd radial von der Drehachse weg und auf die Drehachse zu bewegt wird, wenn es sich bei einer Drehbewegung des drehbaren Teils an der Umfangsfläche entlang bewegt, wobei der Drehbewegung die gewünschte Vibrations- oder Rüttelbewegung überlagert wird.

Um zu erreichen, dass die Drehbewegung des drehbaren Teils des Energiespeichers über eine ausreichende Zeitspanne anhält, zum Beispiel 2 bis 4 Sekunden, ist es vorteilhaft, eine Bremse vorzusehen, die am drehbaren Teil des Energiespeichers angreift und eine schnelle ruckartige Entlastung des Energiespeichers verhindert.

Die Wiederaufladung des Energiespeichers nach jeder Aktivierung der Anzeigevorrichtung erfolgt vorzugsweise elektromechanisch, zum Beispiel mittels eines elektrischen Getriebemotors, der den drehbaren Teil des Energiespeichers unter Verformung in den gespannten Zustand zurück dreht.

Um eine Veränderung der im Energiespeicher gespeicherten Energiemenge und/oder der Zeitspanne der Übertragung der gespeicherten Energie auf die Lenksäule zu ermöglichen, ist zweckmäßig die Bremswirkung der Bremse und/oder der Drehwinkel des drehbaren Teils des Energiespeichers bei dessen Entlastung bzw. Wiederaufladung verstellbar.

### Zeichnung

Die Erfindung wird nachfolgend in einem Ausführungsbeispiel anhand der zugehörigen Zeichnung näher erläutert. Es zeigen:
Figur 1 eine schematische Seitenansicht eines mechanischen Energiespeichers einer Fahrzustandsüberwachungseinrichtung für ein Kraftfahrzeug;
Figur 2 eine teilweise geschnittene schematische Stirnseitenansicht des Energiespeichers nach der Montage in der Nähe einer Lenksäule eines Kraftfahrzeugs.

### Beschreibung des Ausführungsbeispiels

Der in der Zeichnung dargestellte wiederaufladbare mechanische Energiespeicher 2 einer Fahrzustandsüberwachungseinrichtung eines Kraftfahrzeugs dient zur Speicherung einer begrenzten Energiemenge und zur Freisetzung mindestens eines Teils der gespeicherten Energiemenge in Form einer Drehbewegung mit einer überlagerten Vibrationsbewegung, die reibschlüssig auf eine Lenksäule 4 des Kraftfahrzeugs übertragbar ist, um die Vibrationsbewegung zusammen mit einem kleinen gerichteten Drehmoment in die Lenksäule 4 einzuleiten, wenn das Kraftfahrzeug die Spur verlässt und die im Energiespeicher 2 gespeicherte Energiemenge ansprechend auf die Aktivierung geeigneter Spurüberwachungssensoren (nicht dargestellt) der Fahrzustandsüberwachungseinrichtung freigesetzt wird. Die Vibrationsbewegung wird von der Lenksäule 4 in das Lenkrad (nicht dargestellt) übertragen, um den Fahrer der Kraftfahrzeugs auf das Verlassen der Spur hinzuweisen und ihn im Falle eines Sekundenschlafs "wachzurütteln". Das gerichtete Drehmoment dient dabei dazu, dem Fahrer die Richtung anzuzeigen, in der er gegenlenken muss, um das Fahrzeug in die Spur zurück zu führen, oder kann alternativ so groß gewählt werden, dass es das Fahrzeug selbsttätig in Richtung der Spur zurücklenkt, wenn keine anderen Kräfte auf die Lenkung einwirken.

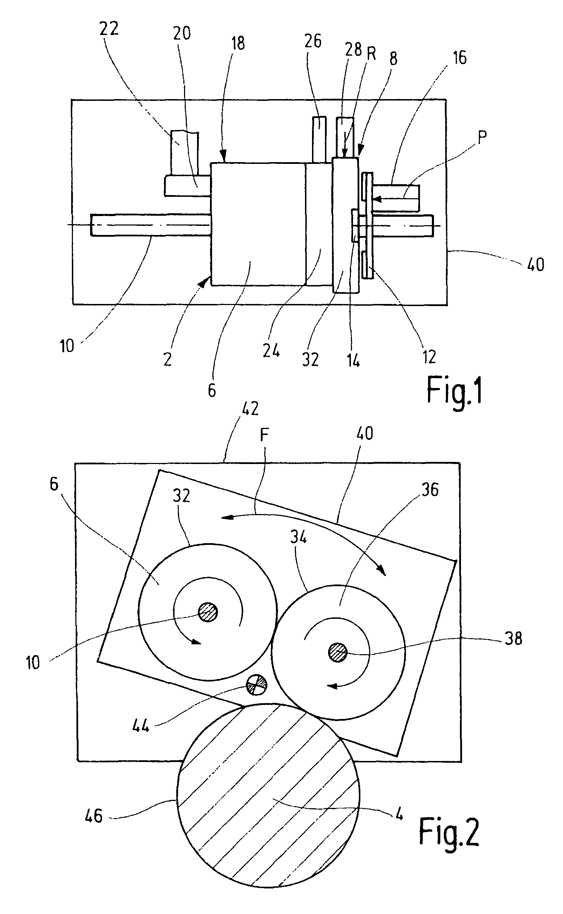

Der Energiespeicher 2 besteht im Wesentlichen aus einem zylindrischen Körper 6 aus einem gummielastischen Material, dessen eines Stirnende 8 drehfest auf einer Welle 10 befestigt ist. Die Welle 10 ist in zwei Lagern (nicht dargestellt) drehbar gelagert, so dass sie sich zusammen mit dem Körper 6 drehen kann, wenn eine dem Stirnende 8 des Körpers gegenüberliegende und in axialer Richtung auf der Welle 10 verschiebbare aber nicht drehbare Sperre 12 aus einem formschlüssigen Eingriff mit axialen Vertiefungen 14 im Stirnende 8 des Körpers 6 ausgerückt ist, wie in Fig. 1 dargestellt. Wenn die Sperre 12 durch Verschiebung mittels eines Stellorgans 16 in Richtung des Pfeils P eingerückt wird, wird eine Drehung des Stirnendes 8 des Körpers 8 durch die Sperre 12 blockiert.

Über das andere Stirnende 18 des Körpers 6 steht im radialen Abstand von der Welle 10 ein Spannorgan 20 über, das über einen Hebelmechanismus 22 (nur teilweise dargestellt) mit einem elektromechanischen Antrieb (nicht dargestellt) verbunden ist. Durch Betätigung des Antriebs kann das Spannorgan 20 zusammen mit dem Stirnende 18 des Körpers 6 um einen einstellbaren Drehwinkel um die Drehachse der Welle 10 verdreht werden. Wenn das andere Stirnende 8 des Körpers 6 mittels der Sperre 12 blockiert ist, werden die beiden Stirnenden 8, 18 in Bezug zueinander verdreht und dabei der Körper 6 reversibel elastisch verformt, wobei die vom Antrieb geleistete Verformungsarbeit in Form von Federenergie im tordierten Körper 6 gespeichert wird.

Die gespeicherte Federenergie wird in Bewegungsenergie umgewandelt, wenn die Sperre 12 bei einer Aktivierung der Spurüberwachungssensoren mittels des Stellorgans 16 entgegen der Richtung des Pfeils P verschoben und aus den Vertiefungen 14 ausgerückt wird. Das Ausrücken der Sperre 12 bewirkt, dass sich der Körper 6 in seinen entlasteten Ausgangszustand zurück verformt, wobei sich das Stirnende 8 des Körpers 6 zusammen mit der Welle 10 mit gleicher Drehrichtung wie beim Spannen des Stirnendes 18 um den eingestellten Drehwinkel dreht.

Der Körper 6 weist entlang seiner Länge einen aufgerauten, gerändelten oder gezackten Umfangsflächenabschnitt 24 auf, gegen den ein verdicktes freies Stirnende einer Blattfeder 26 unter Vorspannung anliegt. Wenn sich das Stirnende 8 des Körpers 6 dreht, bewegt sich die Blattfeder 26 über die Unebenheiten des Umfangsflächenabschnitts 24, wodurch der Körper 6 in Vibrationen versetzt wird.

Durch Verwendung einer entsprechend starken Blattfeder 26 und einer geeigneten Oberflächenbeschaffenheit des Umfangsflächenabschnitts 24 wird das sich drehende Stirnende 8 des Körpers 6 gleichzeitig abgebremst, so dass die im Körper 6 gespeicherte Federenergie nicht ruckartig sondern über eine Zeitspanne von zum Beispiel 3 bis 4 Sekunden freigesetzt wird. Wenn die Blattfeder 26 dazu nicht ausreicht, kann eine zusätzliche Bremse 28 vorgesehen sein, die in der Nähe des Stirnendes 8 des Körpers 6 in Richtung des Pfeils R mit einer verstellbaren Kraft gegen einen Umfangsflächenabschnitt 30 des Körpers 6 anpressbar ist, um dessen Drehung weiter zu verlangsamen.

Das zur Sperre 12 benachbarte Stirnende 8 des Körpers 6 weist einen etwas größeren Durchmesser als der Rest des Körpers 6 auf und wird mit seiner Umfangsfläche 32 reibschlüssig gegen die Umfangsfläche 34 eines Drehrichtungsumkehrrades 36 angepresst, das auf einer zur Welle 10 parallelen Welle 38 frei drehbar gelagert ist, wie am besten in Fig. 2 dargestellt.

Der Körper 6 des Energiespeichers 2 und das Drehrichtungsumkehrrad 36 sind in einem Käfig 40 montiert, der innerhalb eines geschlossenen Gehäuses 42 um eine zu den Wellen 10 und 38 sowie zur Lenksäule 4 parallele Schwenkachse 44 verschwenkbar ist, wie durch den Pfeil F dargestellt, so dass bei Bedarf wahlweise die Umfangsfläche 32 des Körpers 6 oder die Umfangsfläche 34 des Drehrichtungsumkehrrades 36 mit einer Umfangsfläche 46 der Lenksäule 4 in Reibkontakt gebracht werden kann, wenn das Kraftfahrzeug die Spur verlässt und die Spurüberwachungssensoren ansprechen. Wegen der unterschiedlichen Drehrichtung des Körpers 6 und des Drehrichtungsumkehrrades 36 kann die Umfangsfläche 46 der Lenksäule 4 während des Reibkontakts durch eine geeignete Wahl der Schwenkstellung des Käfigs 40 mit einem Drehmoment beaufschlagt werden, das zum Lenkerausschlag beim Verlassen der Spur entgegengesetzt ist.

Durch eine geeignete Wahl der Größe und des Materials des Körpers 6 und des Drehwinkel des Spannorgans 20 und damit der im Körper 6 gespeicherten Federenergie, sowie der Durchmesser der Umfangsflächen 32, 34, 36 und der Reibungskoeffizienten zwischen den Umfangsflächen 32 bzw. 34 und 46 kann das in die Lenksäule 4 übertragbare Drehmoment entweder so eingestellt werden, dass es nicht zu einer Auslenkung des Lenkrades führt und nur dem Fahrer anzeigt, in welche Richtung er gegenlenken muss, oder dass das Fahrzeug langsam wieder in Richtung der Spur zurückgelenkt wird, wenn keine anderen Kräfte auf die Lenkung einwirken.

Während des Reibkontakts zwischen der Umfangsfläche 46 der Lenksäule 4 und der sich drehenden Umfangsfläche 32 des Körpers 6 bzw. des Drehrichtungsumkehrrades 36 wird außerdem die mittels der Blattfeder 26 erzeugte Vibrationsbewegung des Körpers 6 vom Körper 6 selbst oder vom Drehrichtungsumkehrrad 36 in die Lenksäule 4 eingeleitet, so dass auch die Lenksäule 4 in Vibrationen versetzt wird.

Die beiden Schwenkstellungen des Käfigs 40, in denen sich der Körper 6 bzw. das Drehrichtungsumkehrrad 36 im Reibkontakt mit der Umfangsfläche 46 der Lenksäule 4 befinden, stellen zwei Endstellungen des Käfigs 40 dar, der im normalen Fahrzustand in einer Mittelstellung dazwischen gehalten wird, in der sich weder der Körper 6 noch das Drehrichtungsumkehrrad 36 im Kontakt mit der Lenksäule 4 befinden, so dass das Lenkgefühl nicht verändert wird.

## Patentansprüche

1. Fahrzustandsüberwachungseinrichtung für ein Kraftfahrzeug, mit einer Vorrichtung zum Anzeigen eines anormalen Fahrzustands des Kraftfahrzeugs durch Erzeugung einer spürbaren Vibrations- oder Rüttelbewegung einer Lenksäule des Kraftfahrzeugs, **gekennzeichnet durch** einen wiederaufladbaren mechanischen Energiespeicher (2) zur Speicherung einer begrenzten Energiemenge und zur Freisetzung mindestens eines Teils der gespeicherten Energiemenge in Form einer Drehbewegung mit einer überlagerten Vibrations- oder Rüttelbewegung, die auf die Lenksäule (4) übertragbar ist.

2. Fahrzustandsüberwachungseinrichtung nach Anspruch 1, **dadurch gekennzeichnet, dass** der Energiespeicher (2) elektromechanisch wiederaufladbar ist.

3. Fahrzustandsüberwachungseinrichtung nach Anspruch 1 oder 2, **dadurch gekennzeichnet, dass** mindestens ein Teil (6) des Energiespeichers (2) unter Speicherung von Federenergie reversibel elastisch verformbar ist.

4. Fahrzustandsüberwachungseinrichtung nach einem der vorangehenden Ansprüche, **dadurch gekennzeichnet, dass** mindestens ein Teil (8; 6) des Energiespeichers (2) drehbar und/oder reversibel elastisch tordierbar ist und bei einer Aktivierung der Anzeigevorrichtung unter Freigabe von gespeicherter Energie in Drehung versetzt wird.

5. Fahrzustandsüberwachungseinrichtung nach Anspruch 4, **dadurch gekennzeichnet, dass** die im Energiespeicher (2) gespeicherte Energiemenge durch Veränderung des Drehwinkels des drehbaren und/oder reversibel elastisch tordierbaren Teils (8; 6) des Energiespeichers (2) verstellbar ist.

6. Fahrzustandsüberwachungseinrichtung nach Anspruch 4 oder 5, **gekennzeichnet durch** eine am drehbaren und/oder reversibel elastisch tordierbaren Teil (8; 6) des Energiespeichers (2) angreifende Bremse (26, 28) zur Verlangsamung der Drehbewegung.

7. Fahrzustandsüberwachungseinrichtung nach Anspruch 6, **dadurch gekennzeichnet, dass** die Bremswirkung der Bremse (28) verstellbar ist.

8. Fahrzustandsüberwachungseinrichtung nach einem der Ansprüche 4 bis 7, **dadurch gekennzeichnet, dass** der drehbare und/oder elastisch reversibel tordierbare Teil (8; 6) des Energiespeichers (2) eine unebene Umfangsfläche (24) aufweist, mit der ein elastisches Vibrationserzeugungselement (26) im Eingriff steht.

9. Fahrzustandsüberwachungseinrichtung nach einem der Ansprüche 4 bis 8, **dadurch gekennzeichnet, dass** die Drehbewegung mit der überlagerten Vibrations- oder Rüttelbewegung durch Reibkontakt zwischen dem drehbaren und/oder elastisch reversibel tordierbare Teil (8; 6) des Energiespeichers (2) oder einem von diesem angetriebenen Drehrichtungsumkehrelement (36) und der Lenksäule (4) auf die Lenksäule (4) übertragbar ist.

10. Fahrzustandsüberwachungseinrichtung nach Anspruch 9, **dadurch gekennzeichnet, dass** die Richtung einer beim Reibkontakt auf die Lenksäule (4) ausgeübten Reibkraft zu einer die Aktivierung der Anzeigevorrichtung bewirkenden Lenkerauslenkung entgegengesetzt ist.

11. Fahrzustandsüberwachungseinrichtung nach einem der vorangehenden Ansprüche, **dadurch gekennzeichnet, dass** der Energiespeicher (2) von der Lenksäule (4) entkoppelt ist, solange die Anzeigevorrichtung nicht aktiviert ist.

12. Fahrzustandsüberwachungseinrichtung nach einem der Ansprüche 9 bis 11, **dadurch gekennzeichnet, dass** der Energiespeicher (2) und das Drehrichtungsumkehrelement (36) gemeinsam zwischen drei Stellungen verschwenkbar sind, wobei in einer ersten Stellung der drehbare und/oder elastisch reversibel tordierbare Teil (8; 6) des Energiespeichers (2) im Reibkontakt mit der Lenksäule (4) steht, wobei in einer zweiten Stellung das Drehrichtungsumkehrelement (36) im Reibkontakt mit der Lenksäule (4) steht, und wobei in einer dritten Stellung weder der drehbare und/oder elastisch reversibel tordierbare Teil (8; 6) des Energiespeichers (2) noch das Drehrichtungsumkehrelement (36) im Reibkontakt mit der Lenksäule (4) steht.

13. Fahrzustandsüberwachungseinrichtung für ein Kraftfahrzeug, mit einer Vorrichtung zum Anzeigen eines anormalen Fahrzustands des Kraftfahrzeugs durch Erzeugung einer spürbaren Vibrations- oder Rüttelbewegung einer Lenksäule des Kraftfahrzeugs nach einem der vorangehenden Ansprüche, **gekennzeichnet durch** Einrichtungen (2, 6, 8) zur Erzeugung einer Drehbewegung und einer der Drehbewegung überlagerten Vibrations- oder Rüttelbewegung, die reibschlüssig auf die Lenksäule (4) übertragbar ist.

## Claims

1. Driving-condition-monitoring device for a motor vehicle, having a device for displaying an abnormal driving condition of the motor vehicle by generating a perceptible vibration movement or shaking movement of a steering column of the motor vehicle, **characterized by** a rechargeable, mechanical energy store (2) for storing a limited amount of energy and for releasing at least some of the stored amount of energy in the form of a rotational movement with a superimposed vibration movement or shaking movement which can be transmitted to the steering column (4).

2. Driving-condition-monitoring device according to Claim 1, **characterized in that** the energy store (2) can be recharged electromechanically.

3. Driving-condition-monitoring device according to Claim 1 or 2, **characterized in that** at least a portion (6) of the energy store (2) can be reversibly elastically deformed with accompanying storage of spring energy.

4. Driving-condition-monitoring device according to one of the preceding claims, **characterized in that** at least a portion (8; 6) of the energy store (2) can be twisted in a rotatably and/or reversibly elastic fashion, and when the display device is activated said portion (8; 6) can be placed in rotation with accompanying release of stored energy.

5. Driving-condition-monitoring device according to Claim 4, **characterized in that** the amount of energy stored in the energy store (2) can be adjusted by changing the rotational angle of the rotatable and/or reversibly elastically twistable portion (8; 6) of the energy store (2).

6. Driving-condition-monitoring device according to Claim 4 or 5, **characterized by** a brake (26, 28) which acts on the rotatable and/or reversibly elastically twistable portion (8; 6) of the energy store (2) and has the purpose of slowing down the rotational movement.

7. Driving-condition-monitoring device according to Claim 6, **characterized in that** the braking effect of the brake (28) can be adjusted.

8. Driving-condition-monitoring device according to one of Claims 4 to 7, **characterized in that** the rotatable and/or elastically reversibly twistable portion (8; 6) of the energy store (2) has an uneven circumferential face (24) with which an elastic vibration-generating element (26) is in engagement.

9. Driving-condition-monitoring device according to one of Claims 4 to 8, **characterized in that** the rotational movement with the superimposed vibration movement or shaking movement can be transmitted to the steering column (4) through frictional contact between the rotatable and/or elastically reversibly twistable portion (8; 6) of the energy store (2), or a rotational-direction-reversing element (36) driven thereby, and the steering column (4).

10. Driving-condition-monitoring device according to Claim 9, **characterized in that** the direction of a frictional force which is applied to the steering column (4) when frictional contact occurs is opposed to a steering element deflection which brings about activation of the display device.

11. Driving-condition-monitoring device according to one of the preceding claims, **characterized in that** the energy store (2) is disconnected from the steering column (4) as long as the display device is not activated.

12. Driving-condition-monitoring device according to one of Claims 9 to 11, **characterized in that** the energy store (2) and the rotational-direction-reversing element (36) can be pivoted together between three positions, wherein in a first position the rotatable and/or elastically reversibly twistable portion (8; 6) of the energy store (2) is in frictional contact with the steering column (4), wherein in a second position the rotational-direction-reversing element (36) is in frictional contact with the steering column (4), and wherein in a third position neither the rotatable and/or elastically reversibly twistable portion (8; 6) of the energy store (2) nor the rotational-direction-reversing element (36) is in frictional contact with the steering column (4).

13. Driving-condition-monitoring device for a motor vehicle, having a device for displaying an abnormal driving state of the motor vehicle by generating a perceptible vibration movement or shaking movement of a steering column of the motor vehicle according to one of the preceding claims, **characterized by** devices (2, 6, 8) for generating a rotational movement and a vibration movement or shaking movement which is superimposed on the rotational movement and can be transmitted to the steering column (4) in a frictionally locking fashion.

## Revendications

1. Système de surveillance de l'état de roulage d'un véhicule automobile, qui présente un dispositif d'affichage d'un état anormal de roulage du véhicule automobile suite à des déplacements détectables de vibration ou de secousses de la colonne de direction du véhicule automobile,
**caractérisé par**
un accumulateur (2) d'énergie mécanique rechargeable qui accumule une quantité limitée d'énergie et qui libère au moins une partie de la quantité d'énergie accumulée sous la forme d'un déplacement de rotation auquel est superposé un déplacement de vibration ou de secousses qui peut être transféré à la colonne de direction (4).

2. Système de surveillance de l'état de roulage selon la revendication 1, **caractérisé en ce que** l'accumulateur d'énergie (2) peut être rechargé par des moyens électromécaniques.

3. Système de surveillance de l'état de roulage selon les revendications 1 ou 2, **caractérisé en ce qu'**au moins une partie (6) de l'accumulateur d'énergie (2) peut être déformée élastiquement de manière réversible en accumulant de l'énergie élastique.

4. Système de surveillance de l'état de roulage selon l'une des revendications précédentes, **caractérisé en ce qu'**au moins une partie (8; 6) de l'accumulateur d'énergie (2) peut être tournée et/ou mise en torsion élastique réversible et est mise en rotation en libérant l'énergie accumulée lorsque le dispositif d'affichage est activé.

5. Système de surveillance de l'état de roulage selon la revendication 4, **caractérisé en ce que** la quantité d'énergie accumulée dans l'accumulateur d'énergie (2) peut être ajustée par modification de l'angle de rotation de la partie (8; 6) rotative et/ou apte à être mise en torsion élastique réversible de l'accumulateur d'énergie (2).

6. Système de surveillance de l'état de roulage selon les revendications 4 ou 5, **caractérisé par** un frein (26, 28) qui agit sur la partie (8; 6) rotative et/ou apte à être mise en torsion élastique réversible de l'accumulateur d'énergie (2) pour ralentir le déplacement de rotation.

7. Système de surveillance de l'état de roulage selon la revendication 6, **caractérisé en ce que** l'effet de freinage du frein (28) est ajustable.

8. Système de surveillance de l'état de roulage selon l'une des revendications 4 à 7, **caractérisé en ce que** la partie (8; 6) rotative et/ou apte à être mise en torsion élastique réversible de l'accumulateur d'énergie (2) présente une surface périphérique (24) non plane sur laquelle s'engage un élément élastique (26) de production de vibrations.

9. Système de surveillance de l'état de roulage selon l'une des revendications 4 à 8, **caractérisé en ce que** le déplacement de rotation auquel est superposé un déplacement de vibration ou de secousses peut être transféré à la colonne de direction (4) par contact de frottement entre la partie (8; 6) rotative et/ou apte à être mise en torsion élastique réversible de l'accumulateur d'énergie (2) ou un élément (36) d'inversion du sens de rotation entraîné par cette partie et la colonne de direction (4).

10. Système de surveillance de l'état de roulage selon la revendication 9, **caractérisé en ce que** la direction de la force de frottement exercée par contact de frottement sur la colonne de direction (4) est opposée à l'action sur le volant qui a pour effet l'activation du dispositif d'affichage.

11. Système de surveillance de l'état de roulage selon l'une des revendications précédentes, **caractérisé en ce que** l'accumulateur d'énergie (2) peut être désaccouplé de la colonne de direction (4) tant que le dispositif d'affichage n'est pas activé.

12. Système de surveillance de l'état de roulage selon l'une des revendications 9 à 11, **caractérisé en ce que** l'accumulateur d'énergie (2) et l'élément (36) d'inversion du sens de rotation peuvent pivoter ensemble entre deux positions, la partie (8; 6) rotative et/ou apte à être mise en torsion élastique réversible de l'accumulateur d'énergie (2) étant en contact de frottement avec la colonne de direction (4) dans une première position, l'élément (36) d'inversion du sens de rotation étant en contact de frottement avec la colonne de direction (4) dans une deuxième position, ni la partie (8; 6) rotative et/ou apte à être mise en torsion élastique réversible de l'accumulateur d'énergie (2) ni l'élément (36) d'inversion du sens de rotation n'étant en contact de frottement avec la colonne de direction (4) dans une troisième position.

13. Système de surveillance de l'état de roulage d'un véhicule automobile, qui présente un dispositif d'affichage d'un état anormal de roulage du véhicule automobile suite à des déplacements détectables de vibration ou de secousses de la colonne de direction du véhicule automobile selon l'une des revendications précédentes, **caractérisé par** des dispositifs (2, 6, 8) de production d'un déplacement de rotation et d'un déplacement de vibration ou de secousses superposé au déplacement de rotation qui peut être transmis en correspondance de frottement à la colonne de direction (4).
